# EUROPEAN PATENT SPECIFICATION

(11) **EP 0 386 935 B1**
(45) Date of publication and mention of the grant of the patent: **22.11.1995**
(21) Application number: 90302164.0
(22) Date of filing: 28.02.1990
(51) Int. Cl.: G06F 13/42

(54) **Apparatus capable of varying number of wait states for access**
Gerät, das fähig ist, die Anzahl von Wartezuständen für den Zugriff zu variieren
Appareil capable de varier le nombre d'états d'attente pour accès

(30) Priority: 08.03.1989 JP 57303/89
(43) Date of publication of application: 12.09.1990
(73) Proprietor: CANON KABUSHIKI KAISHA, Tokyo (JP)
(72) Inventor: Shimura, Akihiro, Ohta-ku, Tokyo (JP)
(74) Representative: Beresford, Keith Denis Lewis

(56) References cited:
- FR-A- 2 388 342
- WESCON/87 CONFERENCE RECORD, vol. 31, 1987, pages 18/4 (1-8), Los Angeles, CA, US; R.J. JIGOUR et al.: "Peel device architectures enhance microprocessor system logic applications"
- IBM TECHNICAL DISCLOSURE BULLETIN, vol. 24, no. 12, May 1982, pages 6256-6257, New York, US; P.A. BEAVEN et al.: "Matching processor timing sequence to different memories"

## Description

### Field of the Invention

The present invention relates to an information processing apparatus with an interchangeable external memory such as a ROM card.

### Related Background Art

In the conventional information processing apparatus, the number of wait states of the CPU at the access to an interchangeable external memory is either fixed by an incorporated hardware, or controlled by a hardware provided in the external memory.

However. such conventional structure has been associated with following drawbacks:
(1) When the number of wait states for access to the external memory by the CPU is fixed by a hardware incorporated therein, the processing speed cannot be improved even with a memory of higher access speed, capable of functioning with a fewer number of wait states, as the number is fixed in the hardware.
(2) When the number of wait states for access to the external memory by the CPU is controlled by a hardware of the external memory, each external memory has to be provided with such hardware for controlling the number of wait states.

Also there is required a signal line for controlling the number of wait states in the interface with the external memory.

### SUMMARY OF THE INVENTION

In consideration of the foregoing, a concern of the present invention is to provide an apparatus capable of varying the number of wait states for access to the external memory by the CPU.

Another concern of the present invention is to provide an apparatus capable of effecting a process responding to the access time of the memory.

IBM Technical Disclosure Bulletin, Vol. 31, No. 12, May 1982, pages 6256-6257; NY, USA; P.A. Beaven et al 'Matching processor timing sequence to different memories' and French Patent Specification No. FR-A-2,388,342 both disclose apparatus in which access to an external memory is carried out solely by utilising the access timing set by the external memory, this timing being obtained by the main apparatus by an initial interchange of information.

In accordance with the present invention there is provided information processing apparatus as set out in claim 1.

### BRIEF DESCRIPTION OF THE DRAWINGS

Fig. 1 is a block diagram of an information processing apparatus in accordance with an embodiment of the present invention; and
Fig. 2 is a flow chart of a process for setting the number of wait states.

### DESCRIPTION OF THE PREFERRED EMBODIMENTS

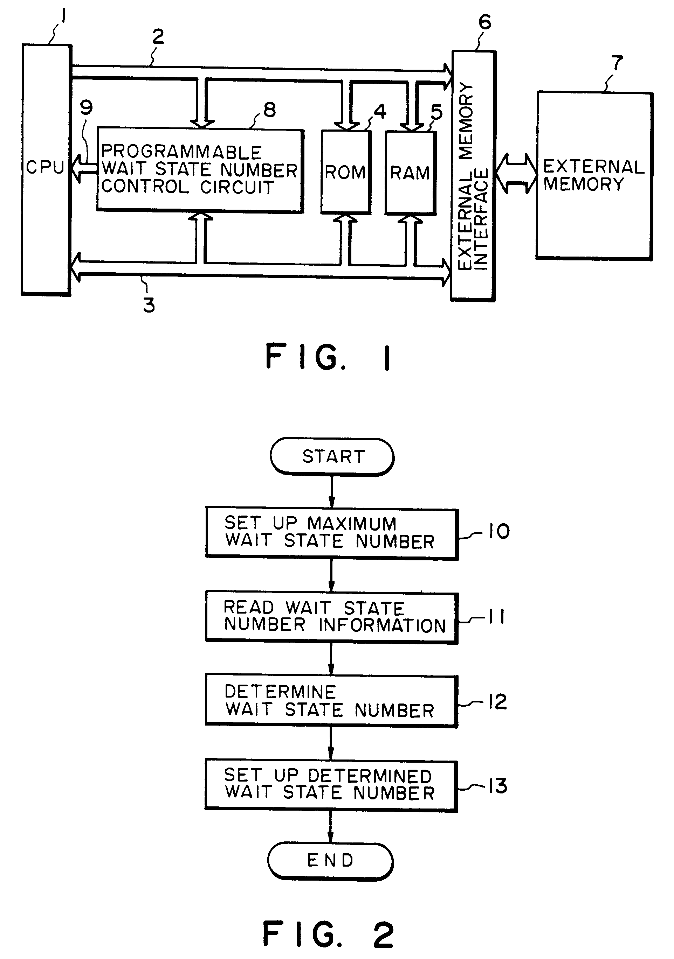

Now the present invention will be clarified in more detail by an embodiment thereof, of which block diagram is shown in Fig. 1.

In Fig. 1 there are shown a CPU 1 for controlling the entire apparatus; an address bus 2 for transferring an address signal indicating the object of control of the CPU 1; a data bus 3 for transferring data among different units of the apparatus; a ROM 4 storing various programs and data, including a program for setting the number of wait states to be explained later, the ROM being replaceable by an equivalent device capable of storing programs and data; a RAM 5 used as a work area for the CPU 1; an interface circuit 6 composed ordinarily of a buffer circuit for an external memory; and an external memory 7 which can be a non-volatile memory such as a ROM or an NVRAM and to which access is made by the CPU 1 through the external memory interface circuit 6.

A programmable wait state number control circuit 8 controls the number of wait states for access to the external memory 7 by the CPU 1, according to a number of wait state designated in the program of the CPU 1. A wait state number control signal 9 is supplied from the control circuit 8 to the CPU 1.

Fig. 2 is a flow chart of a process for setting the number of wait state for access to the external memory.

In the following there will be explained the sequence of setting the number of wait states for the access to the external memory 7, with reference to Fig. 2. At first, prior to the access to the external memory 7, a step S10 sets a largest settable number of wait states in the programmable wait state number control circuit 8. Then, in a step S11, the CPU 1 reads, through the external memory interface circuit 6, the information on the number of wait states provided in advance on the external memory 7 such as ROM or NVRAM. The information can be the number of wait states itself, or the access time of the external memory 7. A step S12 determines the number of wait states, based on the information on the number of wait states obtained in the step S11. The number is either obtained directly from the information if the information represents the number itself, or calculated by the CPU 1 if the information indicates the access time of the external memory 7. Then a step S13 sets the number of wait states, determined in the step S12, in the programmable control circuit.

Through the above-explained process, the number of wait states for the access to the external memory 7 by the CPU 1 through the interface circuit 6 is set in the programmable wait state number control circuit 8, so that the access to the external memory 7 by the CPU 1 is thereafter made with thus set number of wait states.

The foregoing embodiment allows the CPU 1 to make access to the external memory 7 with a number of wait states watching the access speed thereof, without a hardware for controlling the number in the part of the external memory.

In the foregoing embodiment, the external memory 7 is assumed to have only one number of wait states, but memories with different numbers of wait states may be mixedly present in the external memory 7. In such case, information on such different numbers of wait states are stored in advance in memories in the external memory 7, and the step S11 in Fig. 2 reads the information respectively from the memories in the external memory 7 and selects the largest number of wait states among the information, whereby the access to the external memory 7 is made with the number of wait state matching the lowest access speed of the plural memories present in the external memory 7.

As explained in the foregoing, the present invention is to obtain the information, on the number of wait states for access to an interchangeable external memory by the CPU, from the external memory and to control the number of wait states in the access of the CPU to the external memory according to the information, thereby enabling access to the external memory with a number of wait states matching the access speed thereof, without a hardware for controlling the number of wait states on the part of the external memory.

## Claims

1. Information processing apparatus for accessing a detachable memory (7) having information for determining a number of wait states for access, the apparatus comprising reading means (1,2,6) for accessing and reading said information and characterised in that the apparatus further comprises means (4) for setting in said apparatus a maximum value for the number of wait states for access by the apparatus to said external memory, determining means (1) for determining from said information the number of wait states for access to the external memory, and control means (1,6,8) for controlling access to said external memory in accordance with the number of waiting states determined by said determining means.

2. Apparatus according to claim 1, wherein said determining means is operative to determine the number of wait states from the information on the number of wait states in said external memory when the information represents the number of wait states.

3. Apparatus according to claim 1, wherein said determining means can determine the number of wait states for access to said external memory from said information when said information indicates the access time of said external memory.

## Patentansprüche

1. Informations-Verarbeitungsvorrichtung zum Zugreifen auf einen abnehmbaren Speicher (7) mit Informationen zum Bestimmen einer Anzahl von Wartezuständen für den Zugriff, wobei die Vorrichtung eine Lesevorrichtung (1, 2, 6) zum Zugreifen auf die und Lesen der Informationen aufweist, **gekennzeichnet durch**
eine Einrichtung (4) zum Einstellen eines maximalen Wertes für die Anzahl von Wartezuständen für den Zugriff durch die Vorrichtung auf den externen Speicher in der Vorrichtung, eine Bestimmungsvorrichtung (1) zum Bestimmen der Anzahl von Wartezuständen für den Zugriff auf den externen Speicher aus den Informationen, und eine Steuervorrichtung (1, 6, 8) zum Steuern des Zugriffs auf den externen Speicher entsprechend der durch die Bestimmungsvorrichtung bestimmten Anzahl von Wartezuständen.

2. Vorrichtung nach Anspruch 1, **dadurch gekennzeichnet, daß** die Bestimmungsvorrichtung zum Bestimmen der Anzahl von Wartezuständen aus den Informationen über die Anzahl von Wartezuständen in dem externen Speicher dient, wenn die Informationen die Anzahl von Wartezuständen darstellen.

3. Vorrichtung nach Anspruch 1, **dadurch gekennzeichnet, daß** die Bestimmungsvorrichtung die Anzahl von Wartezuständen für den Zugriff auf den externen Speicher aus den Informationen bestimmen kann, wenn die Informationen die Zugriffszeit des externen Speichers angeben.

## Revendications

1. Appareil de traitement d'informations pour accéder à une mémoire amovible (7) ayant une information pour déterminer un certain nombre d'états d'attente pour l'accès, l'appareil comportant des moyens de lecture (1, 2, 6) destinés à accéder à ladite information et à la lire, et caractérisé en ce que l'appareil comporte en outre des moyens (4) destinés à établir, dans ledit appareil, une valeur maximale pour le nombre d'états d'attente pour l'accès par l'appareil à ladite mémoire extérieure, des moyens (1) de détermination destinés à déterminer à partir de ladite information le nombre d'états d'attente pour l'accès à la mémoire extérieure, et des moyens de commande (1, 6, 8) destinés à commander l'accès à ladite mémoire extérieure en fonction du nombre d'états d'attente déterminé par lesdits moyens de détermination.

2. Appareil selon la revendication 1, dans lequel lesdits moyens de détermination fonctionnent de façon à déterminer le nombre d'états d'attente à partir de l'information portant sur le nombre d'états d'attente dans ladite mémoire extérieure lorsque l'information représente le nombre d'états d'attente.

3. Appareil selon la revendication 1, dans lequel lesdits moyens de détermination peuvent déterminer le nombre d'états d'attente pour l'accès à ladite mémoire extérieure à partir de ladite information lorsque ladite information indique le temps d'accès de ladite mémoire extérieure.
